# EUROPEAN PATENT APPLICATION

(11) **EP 3 342 607 A1**
(43) Date of publication of application: **04.07.2018**
(21) Application number: 17189106.2
(22) Date of filing: 01.09.2017
(51) Int. Cl.: B60C 25/18, B60C 23/04

(54) **AUXILIARY FIXTURE FOR A TIRE PRESSURE MONITORING DEVICE**

(30) Priority: 29.12.2016 TW 105143768; 16.03.2017 TW 106108689
(71) Applicant: Orange Electronic Co., Ltd., Taichung City 42881 (TW)
(72) Inventor: HSU, Hsi-Hsing, 42881 Taichung (TW); CHENG, Sheng-Ji, 42881 Taichung (TW); CHEN, Po-Yu, 42881 Taichung (TW)
(74) Representative: Lang, Christian

(57) **Abstract**

An auxiliary fixture (10) for a tire pressure monitoring device includes a handle (16), a positioning base (20) and a holding lever (30). The positioning base includes a pivot segment (21B), a clamping segment (22B) and a quick release structure (26B). The pivot segment (21B) is connected to the handle (16). The clamping segment (22B) has a rear side and a front side. The rear side is connected to the pivot segment (21B), and the front side includes a pushing pin (225). The quick release structure (26B) is detachably connected between the pivot segment (21B) and the clamping segment (22B). The holding lever (30) is pivotally connected to the handle (16). The handle (16) is pivoted relative to the holding lever (30) to push the positioning base (20) so as to enable the pushing pin (225) to press against the tire pressure monitoring device.

## Description

### BACKGROUND

### Technical Field

The present disclosure relates to an auxiliary fixture. More particularly, the present disclosure relates to the auxiliary fixture for a tire pressure monitoring device.

### Description of Related Art

Conventional tire pressure monitoring systems (TPMS) can be classified into a direct-type TPMS and an indirect-type TPMS. The direct-type TPMS has a sensor mounted in a tire to directly detect the air pressure of the tire and to enable the driver to know the actual air pressure of the tire to keep the tire in a stable and safe condition. The indirect-type TPMS has a wheel speed sensor mounted in a braking system of a vehicle to detect the air pressure of the tire by comparing the speed difference of the wheels of the vehicle. With the advances in wireless communication technology, the direct-type TPMS has gradually become the trend of a variety of vehicles to assemble.

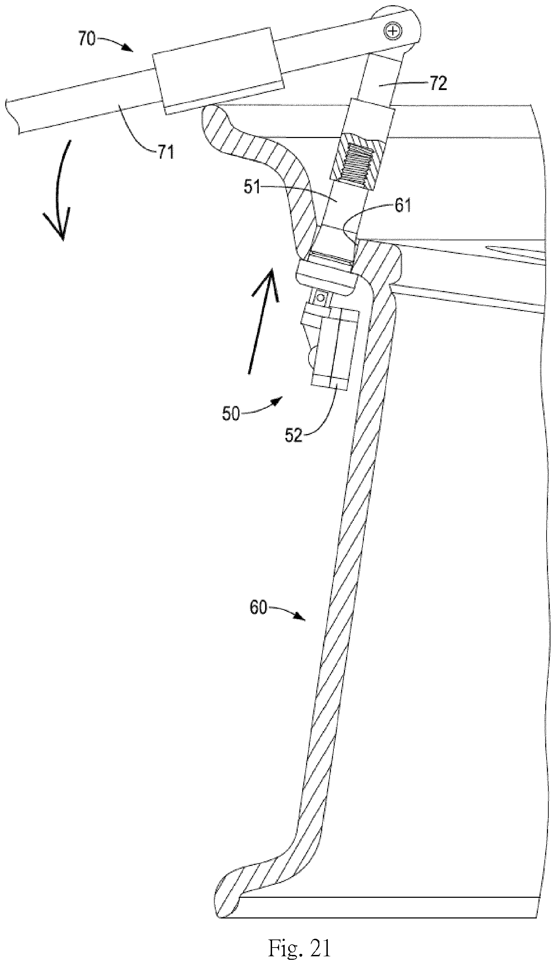

Fig. 21 shows a side cross-sectional view of a conventional auxiliary fixture for a tire pressure monitoring device 50. In Fig. 21, the conventional direct-type TPMS includes a tire pressure monitoring device 50 having a valve stem 51 and a tire pressure sensor 52 connected to the valve stem 51. The conventional TPMS is assembled in a tire rim 60 by a conventional auxiliary fixture 70, and is connected to an electronic system of a vehicle by wireless communication to provide the air pressure of the tire to a user. In order to assemble the tire pressure sensor 52 of the conventional direct-type TPMS in the tire rim 60, the conventional auxiliary fixture 70 includes a handle 71 and a connecting sleeve 72 pivotally connected to the handle 71. During assembly of the conventional auxiliary fixture 70, a free end of the valve stem 51 of the conventional direct-type TPMS is passed through a valve hole 61 of the tire rim 60, and a cap deposited on the free end of the valve stem 51 is removed. The connecting sleeve 72 is connected to the free end of the valve stem 51 by a screwing operation, and the handle 71 is abutted against an outer flange of the tire rim 60 and a downward force is applied on the handle 71. Then, the connecting sleeve 72 is moved upwardly relative to the tire rim 60, so that the valve stem 51 that is connected to the connecting sleeve 72 can be moved up relative to the tire rim 60. Consequently, the valve stem 51 is engaged in the valve hole 61 of the tire rim 60, and the tire pressure sensor 52 is deposited in the tire rim 60.

Although the conventional auxiliary fixture 70 may provide an assembling effect to the conventional direct-type TPMS, the conventional direct-type TPMS is securely deposited in the tire rim 60 by pulling the valve stem 51 via the conventional auxiliary fixture 70. This may adversely affect the condition of an axial center of the valve stem 51 aligning with a center of the valve hole 61 when the direction of the downward force or the user is different. If the axial center of the valve stem 51 is not aligned with the center of the valve hole 61, this represents that the valve stem 51 is not tightly connected to the valve hole 61, and the gas in the tire may leak out of the tire via a gap between the valve stem 51 and the valve hole 61. Furthermore, when the valve stem 51 is not correctly deposited in the valve hole 61 and needs to be reassembled, a sheath which is made of rubber material is disposed around an outer surface of the valve stem 51, and the sheath may be damaged or broken by a periphery of the tire rim 60 around the valve hole 61 during disassembly of the valve stem 51 from the valve hole 61. Then, the valve stem 51 cannot be used again and this is inconvenient in assembly and may increase the cost of assembly. Therefore, the conventional auxiliary fixture 70 still has many problems and inconvenience in use.

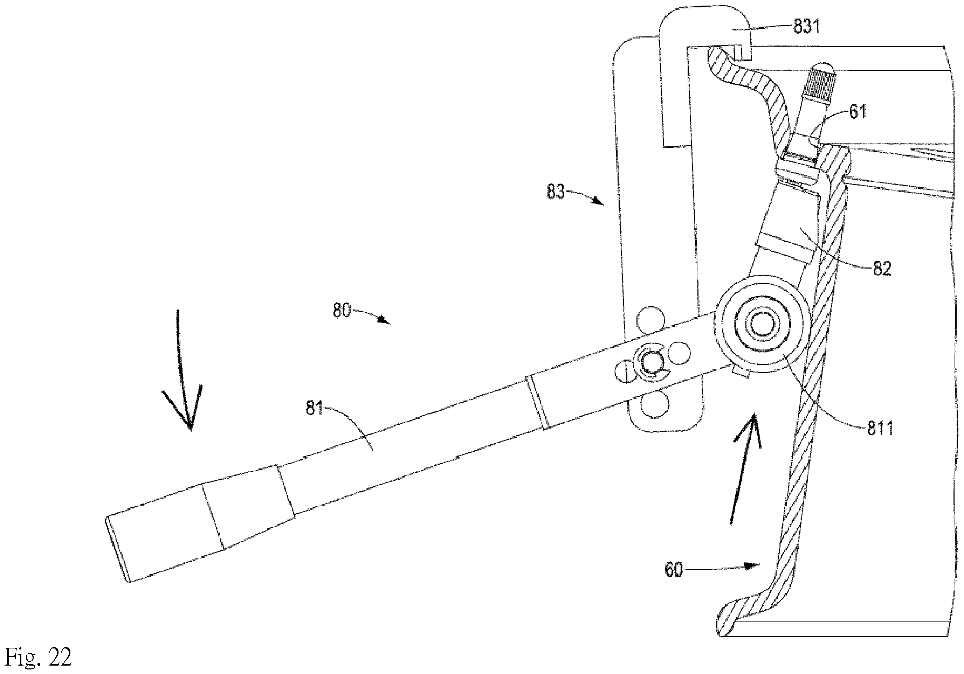

Fig. 22 shows a side cross-sectional view of another conventional auxiliary fixture for a tire pressure monitoring device 50. In Fig. 22, in view of the aforementioned problems of the conventional auxiliary fixture 70, another conventional auxiliary fixture 80 has been developed and includes a handle 81, a positioning base 82 and a holding lever 83. The handle 81 includes two abutting wheels 811 deposited at a front end of the handle 81 at a spaced interval. The positioning base 82 is pivotally connected to the front end of the handle 81 and has a positioning recess formed in a front side of the positioning base 82. The holding lever 83 is pivotally connected to the handle 81 which is selectively abutted against the handle. The holding lever 83 includes an engaging segment 831 deposited on a top end of the holding lever 83. When the conventional auxiliary fixture 80 is used to assemble the conventional direct-type TPMS, the tire pressure sensor 52 of the conventional direct-type TPMS is disposed in the positioning recess of the positioning base 82. The valve stem 51 is extended out of the positioning base 82 and is inserted into the valve hole 61. In addition, the two abutting wheels 811 are abutted against an inner annular surface of the tire rim 60, and the engaging segment 831 of the holding lever 83 is engaged with an outer annular edge of the tire rim 60. When the user presses the handle 81 downwardly, the positioning base 82 is pushed to move toward the valve hole 61 by using a connecting position between the handle 81 and the holding lever 83 as fulcrum. The valve stem 51 is moved with the tire pressure sensor 52. Then, the valve stem 51 is pushed to engage in the valve hole 61. The valve stem 51 is connected to the tire rim 60 via the tire pressure sensor 52 pushed by the conventional auxiliary fixture 80, thus avoiding the influence of different directions of the downward force or different users by pulling the valve stem 51 via the conventional auxiliary fixture 70.

Although the conventional auxiliary fixture 80 may solve the problems of the conventional auxiliary fixture 70, the tire pressure sensor 52 of the conventional direct-type TPMS may have different sizes or shapes, and the structure of the positioning base 82 of the conventional auxiliary fixture 80 is fixed and cannot be adjusted. Therefore, when the user wants to assemble one of the tire pressure sensors 52 having different sizes on the tire rim 60, the positioning base 82 needs to be detached from the handle 81, and a new positioning base 82 having a different size corresponding to the tire pressure sensor 52 is connected to the handle 81. Then, the tire pressure sensor 52 can be deposited in the new positioning base 82 to assemble the conventional direct-type TPMS on the tire rim 60. This may increase the assembling time and the cost of purchasing plural positioning bases 82 having different sizes. Furthermore, another auxiliary fixture for the conventional direct-type TPMS is also disclosed in US 20160303929 A1, and still has the above-mentioned problems. Consequently, the conventional auxiliary fixtures 70, 80 for tire pressure monitoring device 50 need to be improved. The auxiliary fixture for the tire pressure monitoring device 50 of the present disclosure mitigates or obviates the aforementioned problems.

### SUMMARY

According to one aspect of the present disclosure, an auxiliary fixture for a tire pressure monitoring device includes a handle, a positioning base and a holding lever. The positioning base includes a pivot segment, a clamping segment and a quick release structure. The pivot segment is connected to the handle. The clamping segment has a rear side and a front side. The rear side is connected to the pivot segment, and the front side includes a pushing pin. The quick release structure is detachably connected between the pivot segment and the clamping segment. The holding lever is pivotally connected to the handle. The handle is pivoted relative to the holding lever to push the positioning base so as to enable the pushing pin to press against the tire pressure monitoring device.

In one example, the quick release structure includes a mounting head, a mounting recess, an installing recess and an elastic buckle. The mounting head is convexly disposed on a front side of the pivot segment and has a neck portion. The mounting recess is concavely disposed on a rear side of the clamping segment and connected to the mounting head. The front side of the pivot segment is corresponding to the rear side of the clamping segment. The installing recess is concavely disposed on a top side of the clamping segment and communicated with the mounting recess. The elastic buckle is passed through the installing recess and deposited in the mounting recess via the installing recess. The elastic buckle is engaged with the neck portion.

In one example, the quick release structure includes a mounting head, a mounting recess, a receiving recess and an engaging mechanism. The mounting head is convexly disposed on a rear side of the clamping segment and has an engaging recess. The mounting recess is concavely disposed on a front side of the pivot segment and connected to the mounting head. The front side of the pivot segment is corresponding to the rear side of the clamping segment. The receiving recess is concavely disposed on an inner surface of the pivot segment and communicated with the mounting recess. The receiving recess is corresponding to the engaging recess. The engaging mechanism is disposed in the receiving recess. The engaging mechanism is mounted between the pivot segment and the clamping segment so as to position the mounting head in the mounting recess.

In one example, the engaging mechanism includes an elastic member, a positioning ring and an engaging ball. The elastic member is restrictedly mounted in the receiving recess. The positioning ring is disposed in the receiving recess and adjacent to the mounting recess. The positioning ring has a positioning hole, and the positioning hole has a hole diameter. The engaging ball has a ball diameter greater than the hole diameter. The engaging ball is pushed by the elastic member to movably connect to the mounting head, and the engaging ball is partially passed through the positioning hole to connect to the engaging recess.

In one example, the quick release structure includes a mounting head, a mounting recess, an engaging recess and an engaging mechanism. The mounting head is convexly disposed on a rear side of the clamping segment and has a receiving recess. The mounting recess is concavely disposed on a front side of the pivot segment and connected to the mounting head. The front side of the pivot segment is corresponding to the rear side of the clamping segment. The engaging recess is concavely disposed on an inner surface of the pivot segment and communicated with the mounting recess. The engaging recess is corresponding to the receiving recess. The engaging mechanism is disposed in the receiving recess. The engaging mechanism is mounted between the pivot segment and the clamping segment so as to position the mounting head in the mounting recess.

In one example, the engaging mechanism includes an elastic member, a positioning ring and an engaging ball. The elastic member is restrictedly mounted in the receiving recess. The positioning ring is disposed in the receiving recess and adjacent to the mounting recess. The positioning ring has a positioning hole, and the positioning hole has a hole diameter. The engaging ball has a ball diameter greater than the hole diameter. The engaging ball is pushed by the elastic member to movably connect to the mounting recess. The engaging ball is partially passed through the positioning hole to connect to the engaging recess.

In one example, the clamping segment includes a positioning portion, two positioning arms and two adjusting elements. The positioning portion is detachably connected to the pivot segment and connected to the pushing pin. The two positioning arms are integrally connected to two ends of the positioning portion to form a positioning recess. The positioning recess is configured to contain the pushing pin and the tire pressure monitoring device. The two adjusting elements are movably connected to the two positioning arms, respectively. The two adjusting elements are corresponding to each other. The pushing pin is located between the two adjusting elements. There is a distance between the two adjusting elements, and the distance is changed by moving the two adjusting elements so as to detachably connect the clamping segment to the tire pressure monitoring device in the positioning recess.

In one example, the clamping segment includes a positioning portion, two positioning arms and two adjusting elements. The positioning portion is detachably connected to the pivot segment and connected to the pushing pin. The two positioning arms are integrally connected to the two ends of the positioning portion to form a positioning recess, and the positioning recess is configured to contain the pushing pin and the tire pressure monitoring device. The two adjusting elements are movably connected to the two positioning arms, respectively. The two adjusting elements are corresponding to each other. The pushing pin is located between the two adjusting elements. There is a distance between the two adjusting elements, and the distance is changed by moving the two adjusting elements so as to detachably connect the clamping segment to the tire pressure monitoring device in the positioning recess.

In one example, the clamping segment includes a positioning portion, two positioning arms and two adjusting elements. The positioning portion is detachably connected to the pivot segment and connected to the pushing pin. The two positioning arms are integrally connected to the two ends of the positioning portion to form a positioning recess. The positioning recess is configured to contain the pushing pin and the tire pressure monitoring device. The two adjusting elements are movably connected to the two positioning arms, respectively. The two adjusting elements are corresponding to each other. The pushing pin is located between the two adjusting elements. There is a distance between the two adjusting elements, and the distance is changed by moving the two adjusting elements so as to detachably connect the clamping segment to the tire pressure monitoring device in the positioning recess.

In one example, the clamping segment includes a positioning portion, two positioning arms and two adjusting elements. The positioning portion is detachably connected to the pivot segment and connected to the pushing pin. The two positioning arms are integrally connected to the two ends of the positioning portion to form a positioning recess, and the positioning recess is configured to contain the pushing pin and the tire pressure monitoring device. The two adjusting elements are movably connected to the two positioning arms, respectively. The two adjusting elements are corresponding to each other. The pushing pin is located between the two adjusting elements. There is a distance between the two adjusting elements, and the distance is changed by moving the two adjusting elements so as to detachably connect the clamping segment to the tire pressure monitoring device in the positioning recess.

In one example, the auxiliary fixture is configured to dispose the tire pressure monitoring device and a valve stem on a tire rim. The tire pressure monitoring device includes a tire pressure sensor connected to the valve stem. The tire pressure sensor is detachably connected to the positioning base and pushed by the pushing pin. The tire rim includes a valve hole, an inner annular surface and an outer annular edge. The valve stem is inserted into the valve hole. The inner annular surface is abutted by a front end of the handle, and a front end of the holding lever is engaged with the outer annular edge. The handle is pivotally rotated relative to the holding lever to enable the positioning base to press against the tire pressure sensor along an axle direction of the valve hole so as to stably engage the valve stem with the tire rim.

In one example, the auxiliary fixture is configured to dispose the tire pressure monitoring device and a valve stem on a tire rim. The tire pressure monitoring device includes a tire pressure sensor connected to the valve stem, and the tire pressure sensor is detachably connected to the positioning base and pushed by the pushing pin. The tire rim includes a valve hole, an inner annular surface and an outer annular edge. The valve stem is inserted into the valve hole. The inner annular surface is abutted by a front end of the handle, and a front end of the holding lever is engaged with the outer annular edge. The handle is pivotally rotated relative to the holding lever to enable the positioning base to press against the tire pressure sensor along an axle direction of the valve hole so as to stably engage the valve stem with the tire rim.

In one example, the auxiliary fixture is configured to dispose the tire pressure monitoring device and a valve stem on a tire rim. The tire pressure monitoring device includes a tire pressure sensor connected to the valve stem, and the tire pressure sensor is detachably connected to the positioning base and pushed by the pushing pin. The tire rim includes a valve hole, an inner annular surface and an outer annular edge. The valve stem is inserted into the valve hole. The inner annular surface is abutted by a front end of the handle, and a front end of the holding lever is engaged with the outer annular edge. The handle is pivotally rotated relative to the holding lever to enable the positioning base to press against the tire pressure sensor along an axle direction of the valve hole so as to stably engage the valve stem with the tire rim.

In one example, the auxiliary fixture is configured to dispose the tire pressure monitoring device and a valve stem on a tire rim. The tire pressure monitoring device includes a tire pressure sensor connected to the valve stem, and the tire pressure sensor is detachably connected to the positioning base and pushed by the pushing pin. The tire rim includes a valve hole, an inner annular surface and an outer annular edge. The valve stem is inserted into the valve hole. The inner annular surface is abutted by a front end of the handle, and a front end of the holding lever is engaged with the outer annular edge. The handle is pivotally rotated relative to the holding lever to enable the positioning base to press against the tire pressure sensor along an axle direction of the valve hole so as to stably engage the valve stem with the tire rim.

According to another aspect of the present disclosure, an auxiliary fixture for a tire pressure monitoring device includes a handle, a positioning base and a holding lever. The positioning base includes a pivot segment, a clamping segment and two adjusting elements. The pivot segment is connected to the handle. The clamping segment has a rear side and a front side. The rear side is connected to the pivot segment, and the front side includes a pushing pin. The two adjusting elements are movably connected to two ends of the clamping segment. The two adjusting elements are corresponding to each other. The pushing pin is located between the two adjusting elements. There is a distance between the two adjusting elements, and the distance is changed by moving the two adjusting elements so as to detachably connect the clamping segment to the tire pressure monitoring device. The holding lever is pivotally connected to the handle. The handle is pivoted relative to the holding lever to push the positioning base so as to enable the pushing pin to press against the tire pressure monitoring device.

### BRIEF DESCRIPTION OF THE DRAWINGS

The present disclosure can be more fully understood by reading the following detailed description of the embodiment, with reference made to the accompanying drawings as follows:
Fig. 1 shows a schematic view of an auxiliary fixture for a tire pressure monitoring device according to a first embodiment of the present disclosure;
Fig. 2 shows an exploded view of the auxiliary fixture for the tire pressure monitoring device of Fig. 1;
Fig. 3 shows an exploded view of a positioning base of the auxiliary fixture for the tire pressure monitoring device of Fig. 2;
Fig. 4 shows an enlarged schematic top view of the auxiliary fixture for the tire pressure monitoring device of Fig. 1, connected to the tire pressure monitoring device;
Fig. 5 shows a side cross-sectional view of the auxiliary fixture for the tire pressure monitoring device of Fig. 1, disposed the tire pressure monitoring device on a tire rim;
Fig. 6 shows a schematic view of an auxiliary fixture for a tire pressure monitoring device according to a second embodiment of the present disclosure;
Fig. 7 shows an enlarged schematic view of a positioning base of the auxiliary fixture for the tire pressure monitoring device of Fig. 6;
Fig. 8 shows an exploded view of the positioning base of the auxiliary fixture for the tire pressure monitoring device of Fig. 7;
Fig. 9 shows an enlarged schematic front view of the auxiliary fixture for the tire pressure monitoring device of Fig. 6;
Fig. 10 shows a schematic view of a positioning base of an auxiliary fixture for a tire pressure monitoring device according to a third embodiment of the present disclosure;
Fig. 11 shows an exploded view of the positioning base of the auxiliary fixture for the tire pressure monitoring device of Fig. 10;
Fig. 12 shows a side cross-sectional view of the positioning base of the auxiliary fixture for the tire pressure monitoring device of Fig. 10;
Fig. 13 shows a schematic view of a positioning base of an auxiliary fixture for a tire pressure monitoring device according to a fourth embodiment of the present disclosure;
Fig. 14 shows a schematic view of a positioning base of an auxiliary fixture for a tire pressure monitoring device according to a fifth embodiment of the present disclosure;
Fig. 15 shows an exploded view of the positioning base of the auxiliary fixture for the tire pressure monitoring device of Fig. 14;
Fig. 16 shows a side cross-sectional view of the positioning base of the auxiliary fixture for the tire pressure monitoring device of Fig. 14;
Fig. 17 shows a side cross-sectional view of a positioning base of an auxiliary fixture for a tire pressure monitoring device according to a sixth embodiment of the present disclosure;
Fig. 18 shows a side cross-sectional view of a positioning base of an auxiliary fixture for a tire pressure monitoring device according to a seventh embodiment of the present disclosure;
Fig. 19 shows a side cross-sectional view of a positioning base of an auxiliary fixture for a tire pressure monitoring device according to an eighth embodiment of the present disclosure;
Fig. 20 shows an exploded view of a positioning base of an auxiliary fixture for a tire pressure monitoring device according to a ninth embodiment of the present disclosure;
Fig. 21 shows a side cross-sectional view of a conventional auxiliary fixture for a tire pressure monitoring device; and
Fig. 22 shows a side cross-sectional view of another conventional auxiliary fixture for a tire pressure monitoring device.

### DETAILED DESCRIPTION

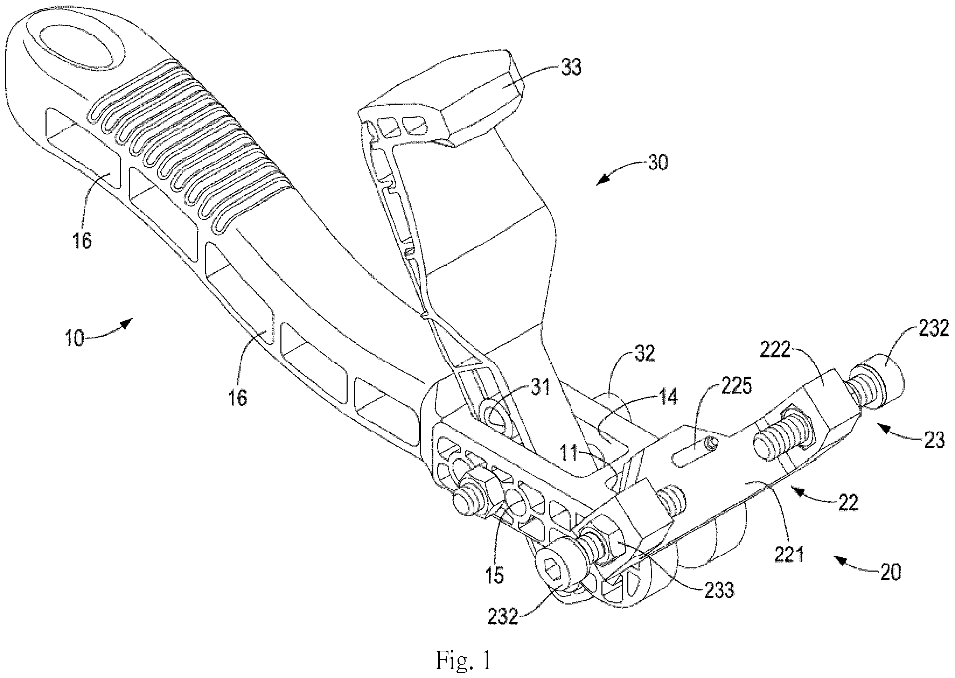

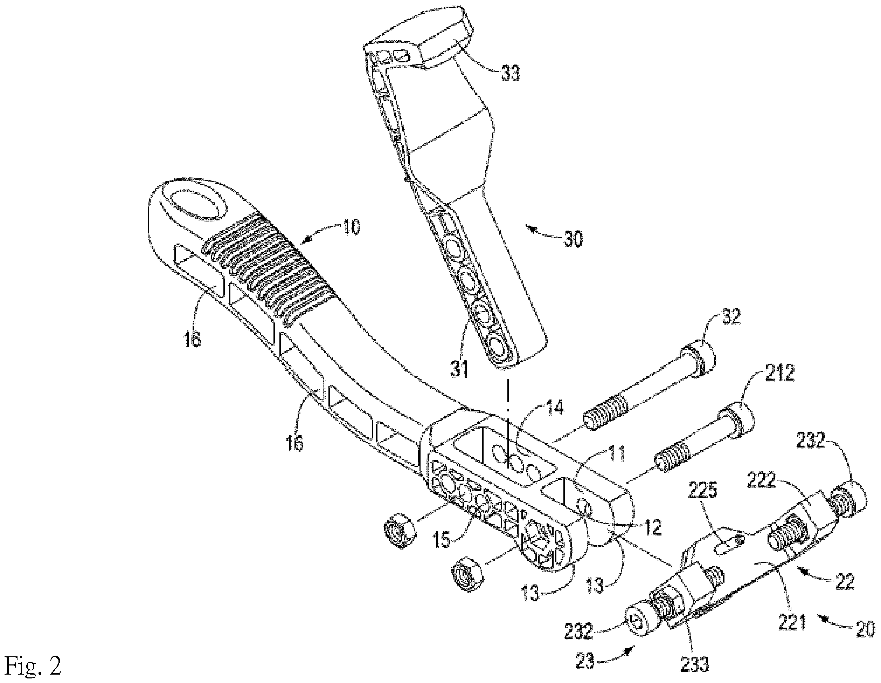

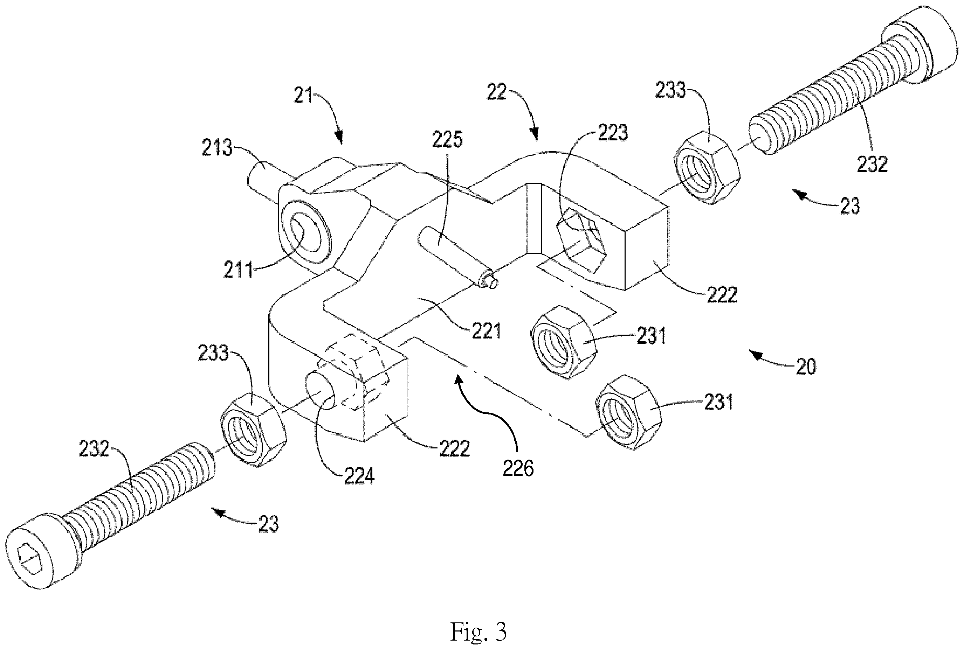

Fig. 1 shows a schematic view of an auxiliary fixture for a tire pressure monitoring device 50 according to a first embodiment of the present disclosure; Fig. 2 shows an exploded view of the auxiliary fixture for the tire pressure monitoring device 50 of Fig. 1; and Fig. 3 shows an exploded view of a positioning base of the auxiliary fixture for the tire pressure monitoring device 50 of Fig. 2. The auxiliary fixture for the tire pressure monitoring device 50 includes a handle 10, a positioning base 20 and a holding lever 30.

The handle 10 includes a front end, a top side, a bottom side, two sidewalls, a connecting recess 11, two connecting holes 12, two abutting segments 13, a pivot recess 14, six pivot holes 15 and five notches 16. The connecting recess 11 is disposed between the two sidewalls of the handle 10 at the front end of the handle 10. The two connecting holes 12 are aligned with each other and passed through the two sidewalls of the handle 10, respectively, so that the two connecting holes 12 are communicated with the connecting recess 11. The two abutting segments 13 have a curved shape and are located on the bottom side of the handle 10 at the front end of the handle 10. The two abutting segments 13 are adjacent to the connecting recess 11 and disposed on the two sidewalls of the handle 10, respectively. The pivot recess 14 is adjacent to the connecting recess 11 and spaced apart from the connecting recess 11 by a distance. The top side of the handle 10 is communicated with the bottom side of the handle 10 by the pivot recess 14. Three of the six pivot holes 15 are aligned with the other three of the six pivot holes 15, respectively. Three of the six pivot holes 15 and the other three of the six pivot holes 15 are passed through the two sidewalls of the handle 10, respectively, so that the six pivot holes 15 are communicated with the pivot recess 14. The five notches 16 are disposed on each of the two sidewalls of the handle 10 away from the connecting recess 11 so as to reduce the total weight of the handle 10.

The positioning base 20 is pivotally connected to the handle 10 and includes a pivot segment 21 and a clamping segment 22. The pivot segment 21 is located at a rear end of the positioning base 20. The pivot segment 21 is pivotally connected to the handle 10 and disposed in the connecting recess 11. The pivot segment 21 includes a through hole 211, a first pivotal element 212, and an abutting pin 213. The through hole 211 is transversally formed through the pivot segment 21 and aligned with the two connecting holes 12 of the handle 10. The first pivotal element 212 is passed through the two connecting holes 12 and the through hole 211. The first pivotal element 212 is positioned at the front end of the handle 10 so as to allow the pivot segment 21 of the positioning base 20 to pivotally connect to the handle 10. The abutting pin 213 is located at a back side of the pivot segment 21 and protruded outwardly from the pivot segment 21. The abutting pin 213 is abutted against the handle 10 to limit an angle between the positioning base 20 and the handle 10. In addition, the clamping segment 22 includes a rear side, a front side, a positioning portion 221, two positioning arms 222 and two adjusting elements 23. The rear side of the clamping segment 22 is connected to the pivot segment 21, and the front side of the clamping segment 22 includes a pushing pin 225. The clamping segment 22 is located at a front end of the positioning base 20 and integrally connected to the pivot segment 21. The clamping segment 22 has a U-shape. The positioning portion 221 is integrally connected to the pivot segment 21 and connected to the pushing pin 225. The two positioning arms 222 are integrally connected to two ends of the positioning portion 221 to form a positioning recess 226. The positioning recess 226 is configured to contain the pushing pin 225 and the tire pressure monitoring device 50. The two adjusting elements 23 are movably connected to the two positioning arms 222 (i.e., two ends of the clamping segment 22), respectively. The two adjusting elements 23 are corresponding to each other. The pushing pin 225 is located between the two adjusting elements 23. There is a distance between the two adjusting elements 23, and the distance is changed by moving the two adjusting elements 23 so as to detachably connect the clamping segment 22 to the tire pressure monitoring device 50 in the positioning recess 226.

In Fig. 3, the clamping segment 22 further includes two limiting recesses 223 and two communicating holes 224. Each of the two limiting recesses 223 is disposed on an inner surface of each of the two positioning arms 222. Each of the two limiting recesses 223 has a polygonal shape, and the two limiting recesses 223 are faced each other. Each of two communicating holes 224 is disposed on an outer surface of each of the two positioning arms 222. The two communicating holes 224 are communicated with the two limiting recesses 223, respectively. In other words, the two communicating holes 224 can be communicated with the positioning recess 226 via the two limiting recesses 223. Each of the two adjusting elements 23 includes a limiting ring 231, an adjusting screw 232 and a connecting ring 233. In the case of one side of the two adjusting elements 23, the limiting ring 231 has a shape corresponding to a shape of the limiting recess 223, so that the limiting ring 231 can be perfectly engaged with the limiting recess 223. The adjusting screw 232 has a clamping end and a rotating end. The clamping end of the adjusting screw 232 is passed through the communicating hole 224 and the limiting recess 223, and then connected to the limiting ring 231. The clamping end of the adjusting screw 232 is extended into the positioning recess 226 of the clamping segment 22. The rotating end of the adjusting screw 232 is located outside of the positioning arm 222. The connecting ring 233 is movably connected to the adjusting screw 232 and abutted against the outer side of the positioning arm 222. The connecting ring 233 is located between the positioning arm 222 and the rotating end of the adjusting screw 232. The adjusting screw 232 is stably disposed on the positioning arm 222 of the clamping segment 22 by the limiting ring 231 and the connecting ring 233. The position of each of the two adjusting screws 232 can be adjusted independently relative to the corresponding positioning arm 222, so that the distance between the two adjusting elements 23 can be changed according to the positions of the two adjusting screws 232.

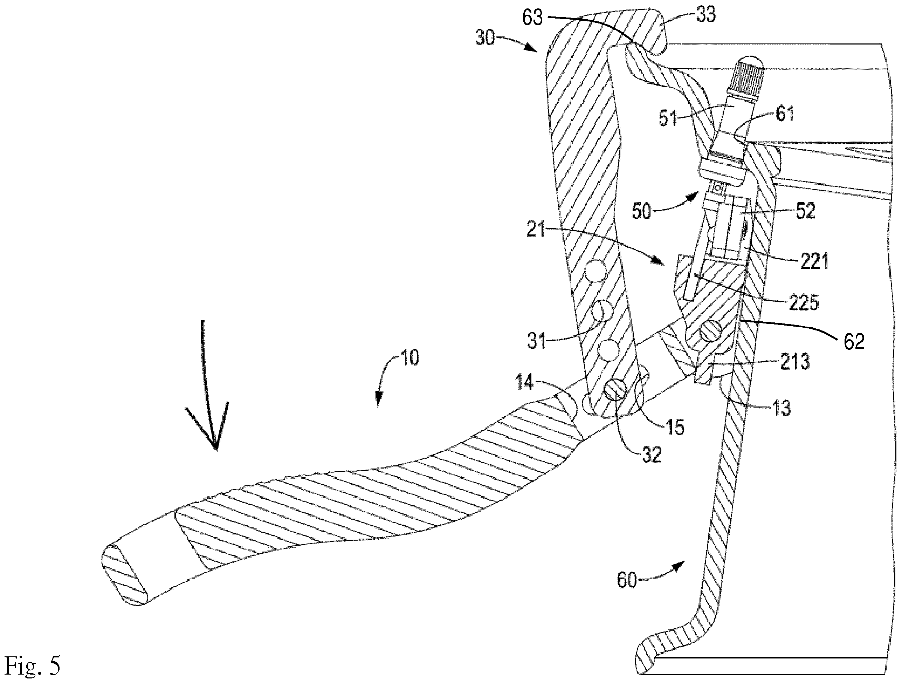

The holding lever 30 is pivotally connected to the handle 10. The holding lever 30 includes a lower end, a top end, two opposite sidewalls, plural adjusting holes 31, a second pivotal element 32 and an engaging segment 33. The lower end of the holding lever 30 is passed through the pivot recess 14 from the top side to the bottom side of the handle 10. The adjusting holes 31 are transversally formed through the two opposite sidewalls of the holding lever 30 and adjacent to the lower end of the holding lever 30. One of the adjusting holes 31 is corresponding to two of the pivot holes 15 of the handle 10 which are aligned with each other. The second pivotal element 32 is passed through one of the adjusting holes 31 and two of the pivot holes 15 which are aligned with the corresponding adjusting hole 31, thus pivotally connecting the holding lever 30 to the handle 10 behind the rear end of the positioning base 20. The engaging segment 33 is located at the top end of the holding lever 30 and configured to engage an outer annular edge 63 of a tire rim 60, as shown in Fig. 5.

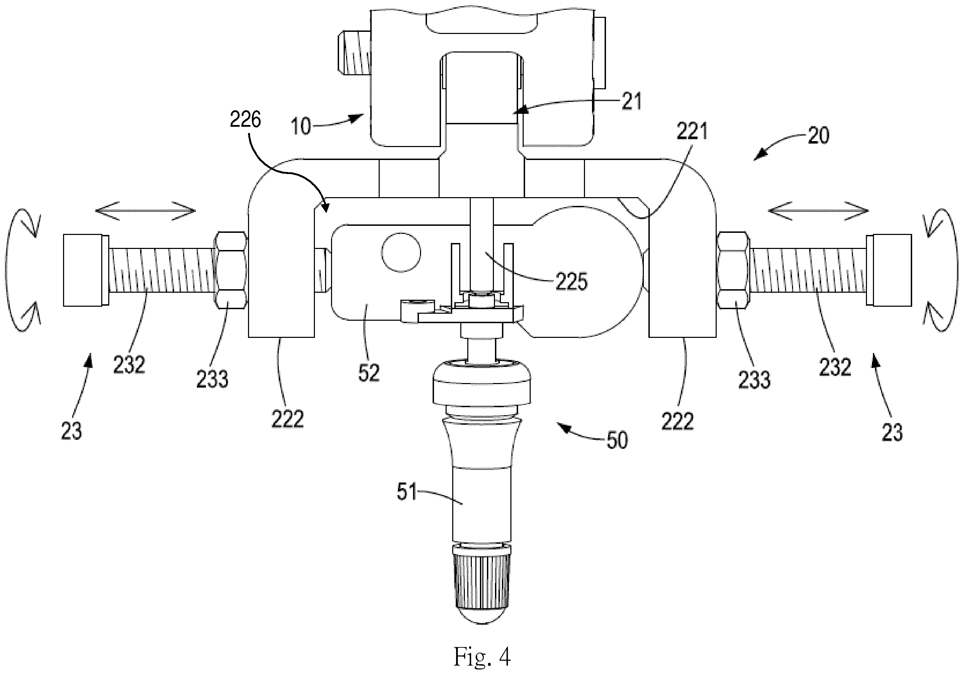

Fig. 4 shows an enlarged schematic top view of the auxiliary fixture for the tire pressure monitoring device 50 of Fig. 1, connected to the tire pressure monitoring device 50. The auxiliary fixture is configured to dispose the tire pressure monitoring device 50 and a valve stem 51. The tire pressure monitoring device 50 belongs to a direct-type tire pressure monitoring system (TPMS). The tire pressure monitoring device 50 includes a tire pressure sensor 52 connected to the valve stem 51. The tire pressure sensor 52 is detachably connected to the positioning base 20 and pushed by the pushing pin 225. The tire pressure sensor 52 is disposed in the positioning recess 226 of the positioning base 20. The two adjusting screws 232 may be rotated respectively to change the positions of the two adjusting screws 232 relative to the positioning arms 222 according to the size of the tire pressure sensor 52. Moreover, one of the two adjusting screws 232 can be rotated to adjust separately or the two adjusting screws 232 are both rotated together to adjust relative to the positioning arms 222, thereby providing a bidirectional independent adjusting effect. The clamping end of the adjusting screw 232 is abutted against the tire pressure sensor 52 so as to stably dispose the tire pressure sensor 52 in the positioning recess 226.

Fig. 5 shows a side cross-sectional view of the auxiliary fixture for the tire pressure monitoring device 50 of Fig. 1. The auxiliary fixture is configured to dispose the tire pressure monitoring device 50 and a valve stem 51 on a tire rim 60 after the tire pressure sensor 52 is stably disposed in the positioning recess 226. The tire rim 60 includes a valve hole 61, an inner annular surface 62 and an outer annular edge 63. The valve stem 51 is inserted into the valve hole 61 of the tire rim 60. The inner annular surface 62 is abutted by the two abutting segments 13 of the handle 10. The engaging segment 33 of the holding lever 30 is engaged with the outer annular edge 63 of the tire rim 60. The handle 10 pushed by a force is pivotally rotated relative to the holding lever 30 to enable the pushing pin 225 of the positioning base 20 to press against the tire pressure sensor 52 along an axle direction of the valve hole 61 so as to stably engage the valve stem 51 with the valve hole 61 of the tire rim 60. In other words, the handle 10 is pivoted relative to the holding lever 30 to push the positioning base 20 so as to enable the pushing pin 225 to press against the tire pressure monitoring device 50. Accordingly, the auxiliary fixture for the tire pressure monitoring device 50 of the present disclosure can improve the assembling efficiency of the valve stem 51 and the tire rim 60, and adaptively adjust the size of the positioning recess 226 of the positioning base 20 by the two adjusting elements 23 according to different sizes of the tire pressure sensors 52, thereby reducing the cost of purchasing plural positioning bases 20 having different sizes.

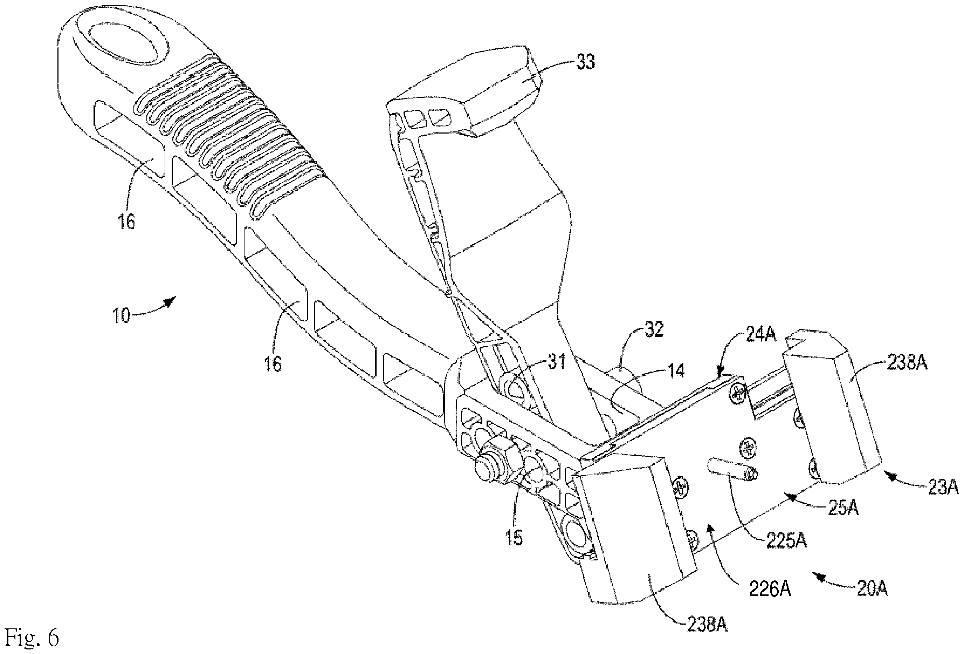

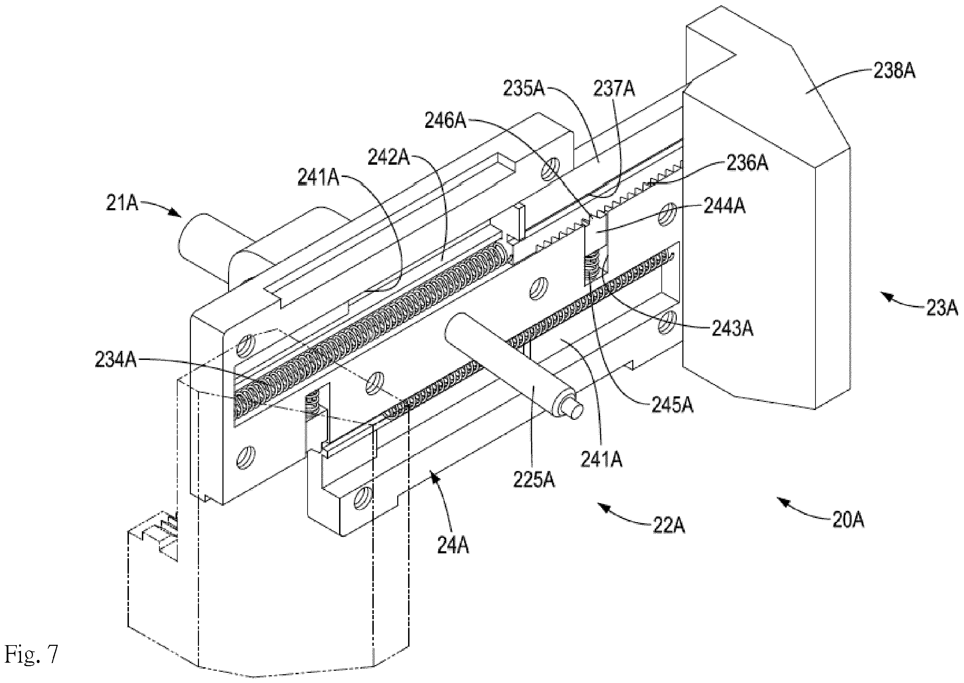

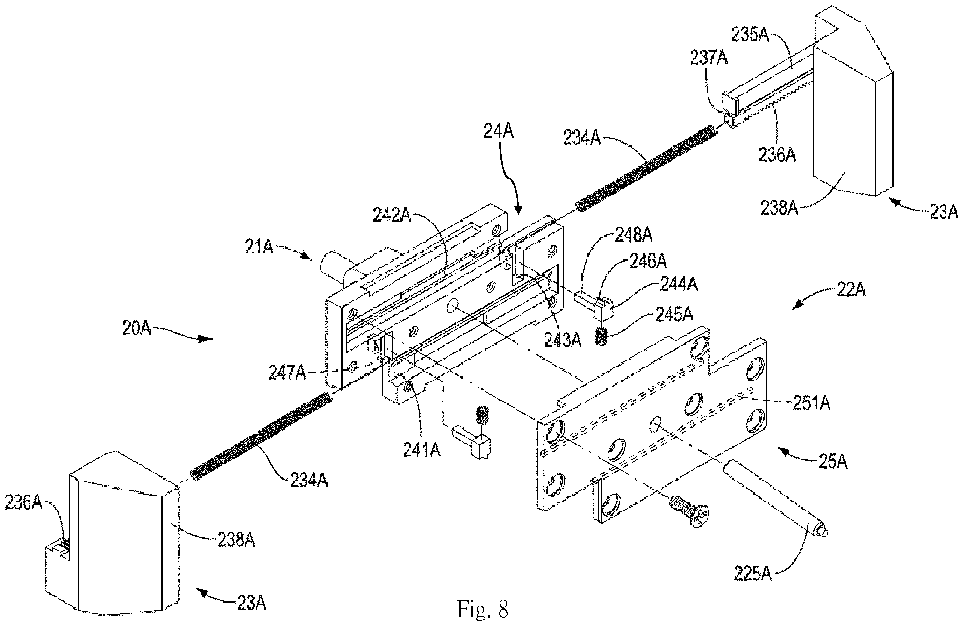

Fig. 6 shows a schematic view of an auxiliary fixture for a tire pressure monitoring device 50 according to a second embodiment of the present disclosure; Fig. 7 shows an enlarged schematic view of a positioning base 20A of the auxiliary fixture for the tire pressure monitoring device 50 of Fig. 6; and Fig. 8 shows an exploded view of the positioning base 20A of the auxiliary fixture for the tire pressure monitoring device 50 of Fig. 7. In Figs. 6-8, the positioning base 20A includes a pivot segment 21A, a clamping segment 22A and two adjusting elements 23A. A difference between the first embodiment of Fig. 1 and the second embodiment of Figs. 6-8 is that the clamping segment 22A includes a bottom seat 24A and a covering panel 25A. The bottom seat 24A is integrally connected to the pivot segment 21A. The bottom seat 24A includes a front side, a rear side, two side edges, two guiding slots 241A, two mounting ribs 242A, two communicating recesses 243A, two limiting blocks 244A, two first elastic elements 245A, two release holes 247A and two pulling tabs 248A. The two guiding slots 241A are concavely disposed on the front side of the bottom seat 24A and are parallel with each other at a spaced interval. Each of the two guiding slots 241A has an opening end, a closed end and a bottom face. The opening end of each of the two guiding slots 241A is formed through one of the two side edges of the bottom seat 24A. In other words, the two opening ends of the two guiding slots 241A are deposited on the two side edges of the bottom seat 24A, respectively. Each of the two mounting ribs 242A is protruded outwardly from the bottom face of one of the two guiding slots 241A and disposed from the closed end to the opening end of the corresponding guiding slot 241A. The communicating recesses 243A are longitudinally formed in the front side of the bottom seat 24A. Each of the two communicating recesses 243A is adjacent to the opening end of the corresponding guiding slot 241A. The two limiting blocks 244A and the two first elastic elements 245A are disposed in the two communicating recesses 243A, respectively. Each of the two limiting blocks 244A can be reciprocately moved in a longitudinal direction in the corresponding communicating recess 243A. Each of the two limiting blocks 244A includes an outer side, an inner side and a limiting tooth 246A. The limiting tooth 246A is protruded outwardly from the outer side of the corresponding limiting block 244A and corresponding to the opening end of the corresponding guiding slot 241A. The two first elastic elements 245A are abutted by the inner sides of the two limiting blocks 244A, respectively, so that each of the two limiting blocks 244A and the corresponding limiting tooth 246A can be reciprocately moved in the longitudinal direction.

Furthermore, the two release holes 247A are elongated in the longitudinal direction and formed through the rear side of the bottom seat 24A. The two release holes 247A are communicated with the two communicating recesses 243A, respectively. The two pulling tabs 248A are protruded outwardly from the two limiting blocks 244A, respectively, and are passed through the rear side of the bottom seat 24A via the two release holes 247A. Consequently, the user may pull one of the two pulling tabs 248A to move the corresponding limiting block 244A relative to the corresponding communicating recess 243A, thus compressing the corresponding first elastic element 245A and moving the limiting tooth 246A in the corresponding communicating recess 243A. Additionally, the covering panel 25A is connected to the front side of the bottom seat 24A to partially close the two guiding slots 241A and the two communicating recesses 243A. The covering panel 25A includes an inner side and two connecting ribs 251A. The inner side of the covering panel 25A faces the front side of the bottom seat 24A. The two connecting ribs 251A are transversally protruded from the inner side of the covering panel 25A and aligned with the two mounting ribs 242A of the bottom seat 24A, respectively.

The two adjusting elements 23A may be moved relative to the clamping segment 22A. Each of the two adjusting elements 23A includes a second elastic element 234A, a guiding arm 235A and a clamping block 238A. The two second elastic elements 234A of the two adjusting elements 23A are disposed in the two guiding slots 241A of the bottom seat 24A, respectively. The guiding arm 235A is inserted in one of the two guiding slots 241A and abutted against the second elastic element 234A which is disposed in the corresponding guiding slot 241A. The guiding arm 235A includes a forming side, an inner side, an outer side, an engaging rack 236A and two mounting slots 237A. The forming side of the guiding arm 235A faces the communicating recess 243A. The engaging rack 236A is protruded from the forming side of the guiding arm 235A and selectively engaged with the limiting tooth 246A of the limiting block 244A which is disposed in the corresponding communicating recess 243A. The two mounting slots 237A are concavely formed in the inner side and the outer side of the guiding arm 235A, respectively. The two mounting slots 237A are faced in the opposite direction and engaged with one of the two mounting ribs 242A of the bottom seat 24A and one of the two connecting ribs 251A of the covering panel 25A, respectively. Thus, each of the two guiding arms 235A can be stably moved between the bottom seat 24A and the covering panel 25A along the direction of the corresponding connecting rib 251A and the corresponding mounting rib 242A (i.e., each of the two guiding arms 235A is moved in the transversal direction). The clamping block 238A is connected to one end of the guiding arm 235A, and the second elastic element 234A is connected to the other end of the guiding arm 235A. In other words, the guiding arm 235A and the engaging rack 236A are both disposed between the second elastic element 234A and the clamping block 238A. The clamping block 238A can be used as one of the two adjusting screws 232 of the positioning base 20 in the first embodiment of the auxiliary fixture for the tire pressure monitoring device 50 in Fig. 4. A positioning recess 226A is formed between the covering panel 25A and the two clamping blocks 238A of the positioning base 20A.

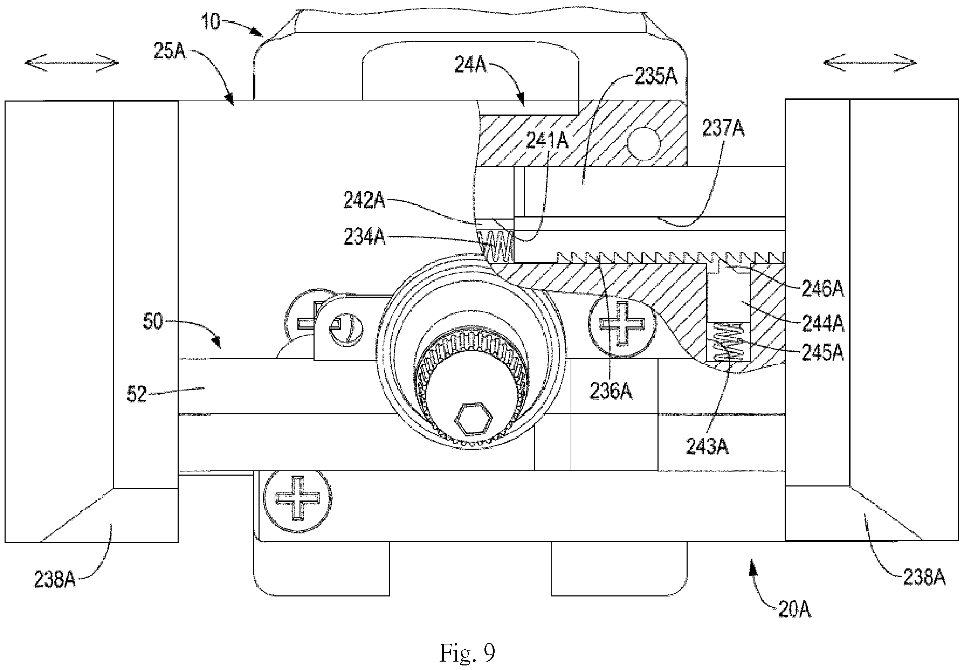

Fig. 9 shows an enlarged schematic front view of the auxiliary fixture for the tire pressure monitoring device 50 of Fig. 6. In Figs. 8 and 9, the tire pressure sensor 52 of the conventional direct-type TPMS is disposed in the positioning recess 226A between the covering panel 25A and the two clamping blocks 238A. The tire pressure sensor 52 is detachably connected to the positioning base 20A and pushed by the pushing pin 225A. One or both clamping blocks 238A may be pushed toward the positioning recess 226A according to the size of the tire pressure sensor 52, so that the guiding arm 235A connected to the corresponding clamping block 238A is moved along the corresponding guiding slot 241A relative to the clamping segment 22A. During the movement of the guiding arm 235A, the corresponding first elastic element 245A is compressed by the limiting block 244A via the movable engagement between the limiting tooth 246A and the engaging rack 236A so as to enable the limiting tooth 246 to disengage from the engaging rack 236A. When the guiding arm 235A is moved to drive the corresponding clamping block 238A to abut against the tire pressure sensor 52, the limiting block 244A is pushed by the first elastic element 245A to engage the limiting tooth 246A with the engaging rack 236A, thus stably clamping the tire pressure sensor 52 by the two clamping blocks 238A. In other words, the tire pressure sensor 52 can be securely disposed in the positioning recess 226A by the clamping blocks 238A and the pushing pin 225A.

In addition, when the size of the tire pressure sensor 52 of the conventional direct-type TPMS is larger than the distance between the two clamping blocks 238A, one or both pulling tabs 248A can be pulled to move relative to the corresponding release holes 247A. The first elastic element 245A is compressed by the corresponding limiting block 244A via the movable engagement between the limiting tooth 246A and the engaging rack 236A so as to enable the limiting tooth 246A to disengage from the engaging rack 236A. When the limiting tooth 246 is disengaged from the engaging rack 236A, the corresponding guiding arm 235A can be moved outwardly relative to the bottom seat 24A to increase the distance between the two clamping blocks 238A, thus being capable of containing the tire pressure sensor 52 having a larger size than the original distance between the two clamping blocks 238A. Because the structure and operation of the two guiding arms 235A are independent, the user may push one or two of the clamping blocks 238A according to the user's need or the size of the tire pressure sensor 52 to securely clamp the tire pressure sensor 52 between the two clamping blocks 238A. The operation of depositing the conventional direct-type TPMS on the tire rim 60 via the auxiliary fixture for the tire pressure monitoring device 50 according to the second embodiment of Figs. 6-9 is same as the first embodiment of Fig. 5, and is not described in detail.

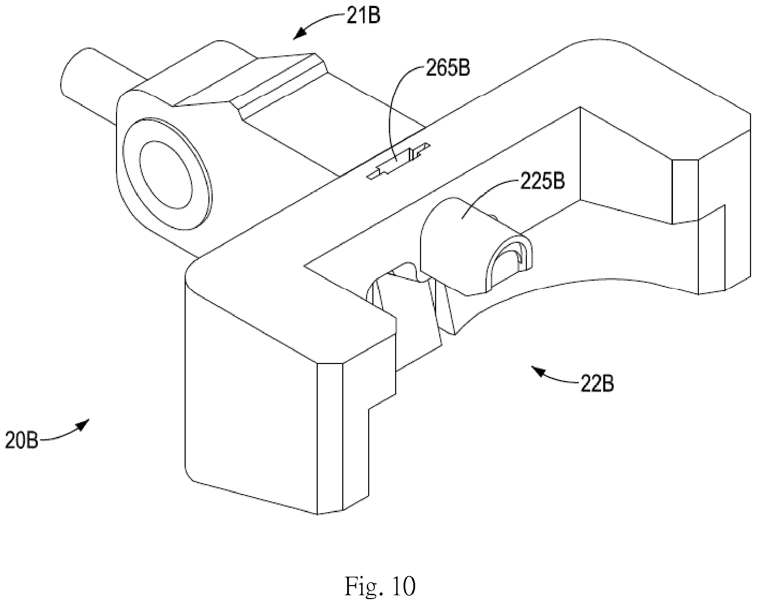

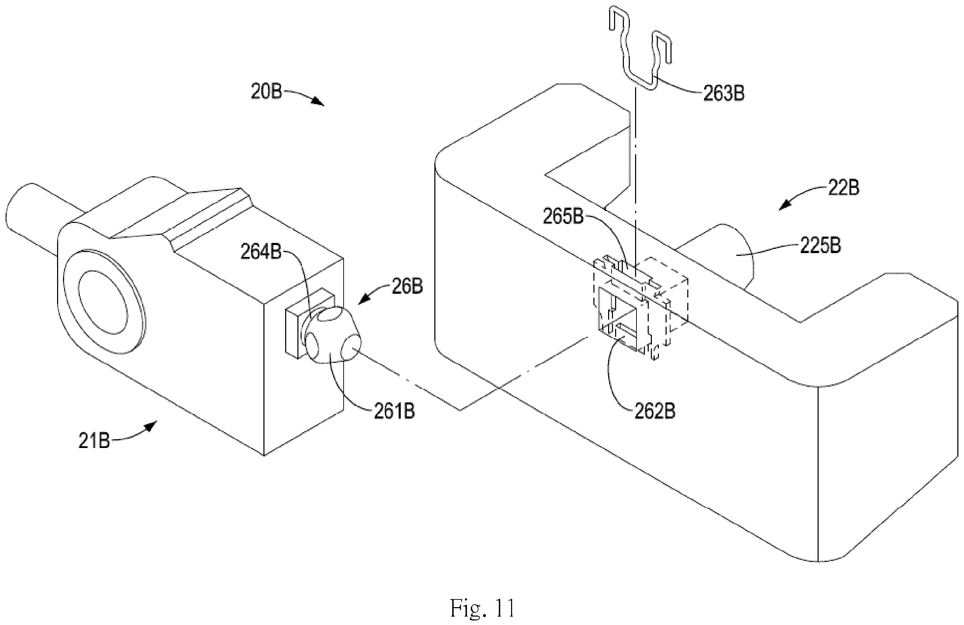

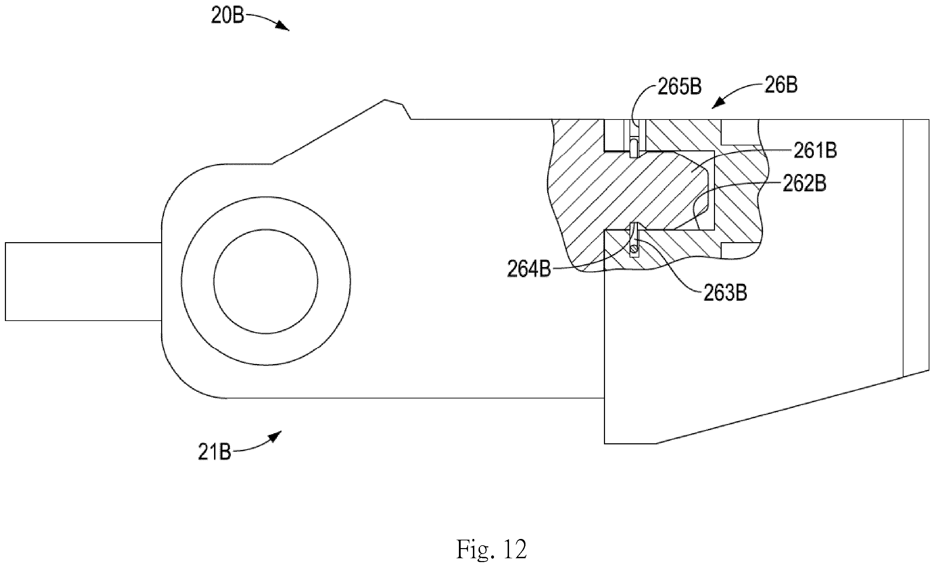

Fig. 10 shows a schematic view of a positioning base 20B of an auxiliary fixture for a tire pressure monitoring device 50 according to a third embodiment of the present disclosure; Fig. 11 shows an exploded view of the positioning base 20B of the auxiliary fixture for the tire pressure monitoring device 50 of Fig. 10; and Fig. 12 shows a side cross-sectional view of the positioning base 20B of the auxiliary fixture for the tire pressure monitoring device of Fig. 10. In Figs. 10-12, the auxiliary fixture for the tire pressure monitoring device 50 includes a handle 10, the positioning base 20B and a holding lever 30. The detail of the handle 10 and the holding lever 30 is the same as the embodiments of Fig. 1, and will not be described again herein. In Figs. 10-12, the positioning base 20B includes a pivot segment 21B, a clamping segment 22B and a quick release structure 26B. The pivot segment 21B is connected to the handle 10. The clamping segment 22B has a rear side and a front side. The rear side of the clamping segment 22B is connected to the pivot segment 21B. The front side of the clamping segment 22B includes a pushing pin 225B. The quick release structure 26B is detachably connected between the pivot segment 21B and the clamping segment 22B. The handle 10 is pivoted relative to the holding lever 30 to push the positioning base 20B so as to enable the pushing pin 225B to press against the tire pressure monitoring device 50. In detail, the quick release structure 26B includes a mounting head 261B, a mounting recess 262B, an installing recess 265B and an elastic buckle 263B. The mounting head 261B is convexly disposed on a front side of the pivot segment 21B and has a neck portion 264B. The mounting head 261B has a conical shape. The mounting recess 262B is concavely disposed on a rear side of the clamping segment 22B and connected to the mounting head 261 B. The front side of the pivot segment 21 B is corresponding to the rear side of the clamping segment 22B. The installing recess 265B is concavely disposed on a top side of the clamping segment 22B and communicated with the mounting recess 262B. The elastic buckle 263B is a U-shaped elastic element. The elastic buckle 263B is passed through the installing recess 265B and deposited in the mounting recess 262B via the installing recess 265B. The elastic buckle 263B is engaged with the neck portion 264B. Accordingly, the clamping segment 22B can be detachably connected to the pivot segment 21B by the quick release structure 26B.

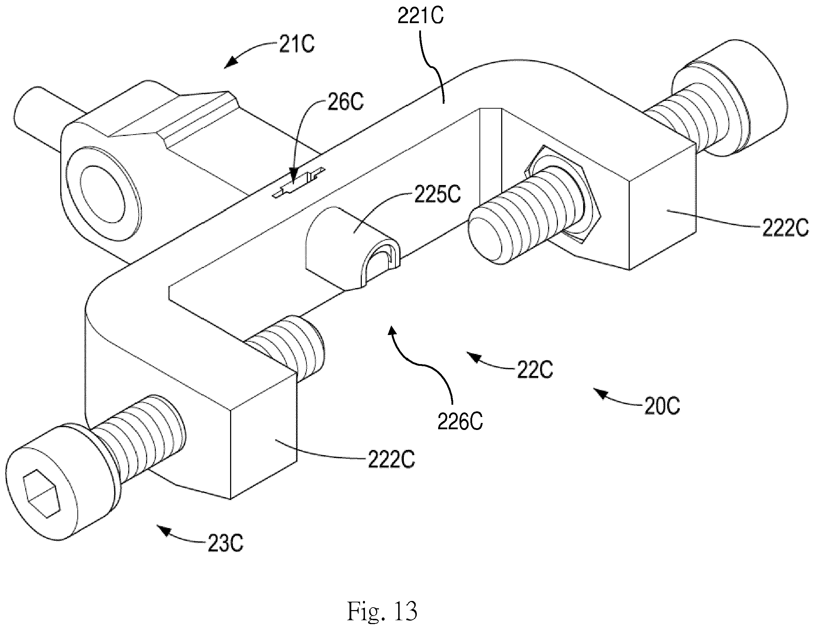

Fig. 13 shows a schematic view of a positioning base 20C of an auxiliary fixture for a tire pressure monitoring device 50 according to a fourth embodiment of the present disclosure. The positioning base 20C is pivotally connected to the handle 10 and includes a pivot segment 21C, a clamping segment 22C and a quick release structure 26C. The pivot segment 21C and the quick release structure 26C are respectively the same as the pivot segment 21B and the quick release structure 26B in Fig. 10. The clamping segment 22C is connected to the pivot segment 21C by the quick release structure 26C. The clamping segment 22C includes a positioning portion 221C, two positioning arms 222C and two adjusting elements 23C. The quick release structure 26C is disposed on the positioning portion 221C. The positioning portion 221C is detachably connected to the pivot segment 21C and connected to the pushing pin 225C. The two positioning arms 222C are integrally connected to the two ends of the positioning portion 221C to form a positioning recess 226C, and the positioning recess 226C is configured to contain the pushing pin 225C and the tire pressure monitoring device 50. The two adjusting elements 23C are movably connected to the two positioning arms 222C, respectively. The two adjusting elements 23C are corresponding to each other. The pushing pin 225C is located between the two adjusting elements 23C. There is a distance between the two adjusting elements 23C, and the distance is changed by moving the two adjusting elements 23C so as to detachably connect the clamping segment 22C to the tire pressure monitoring device 50 in the positioning recess 226C.

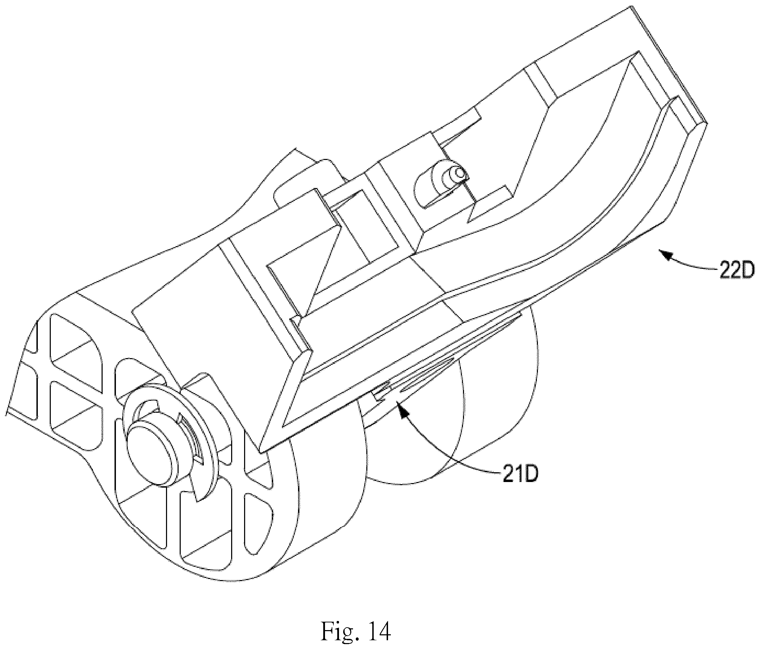

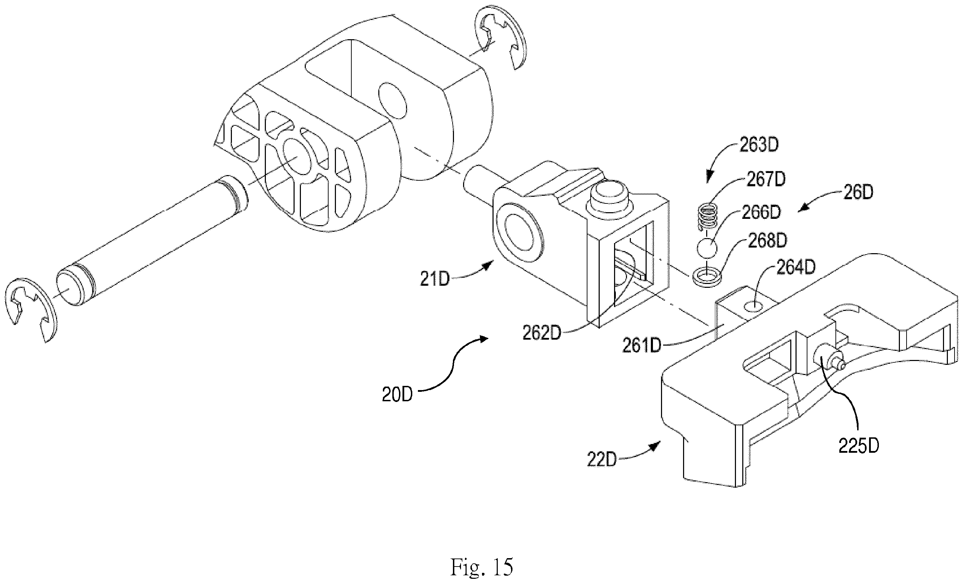

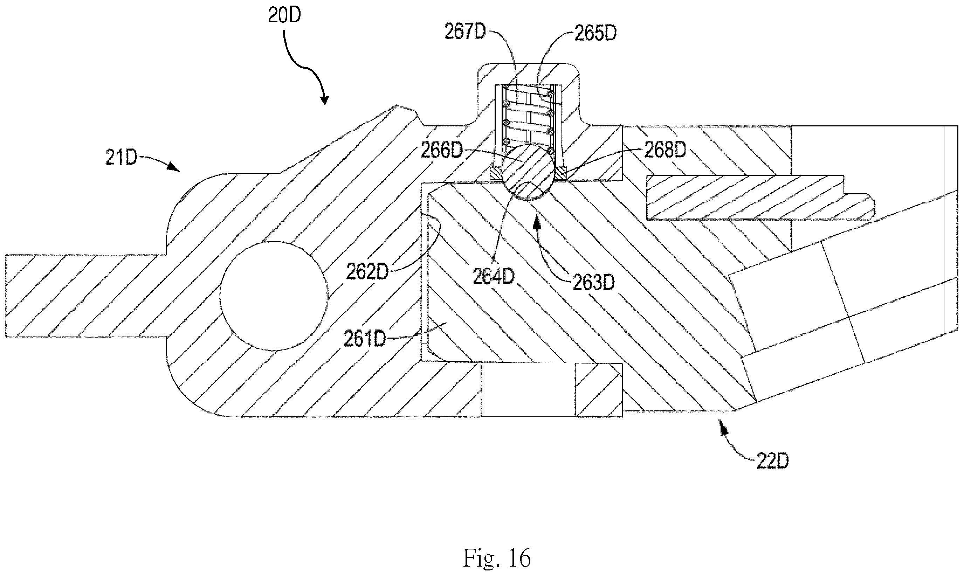

Fig. 14 shows a schematic view of a positioning base 20D of an auxiliary fixture for a tire pressure monitoring device 50 according to a fifth embodiment of the present disclosure; Fig. 15 shows an exploded view of the positioning base 20D of the auxiliary fixture for the tire pressure monitoring device 50 of Fig. 14; and Fig. 16 shows a side cross-sectional view of the positioning base 20D of the auxiliary fixture for the tire pressure monitoring device 50 of Fig. 14. A difference between the fifth embodiment of Figs. 14-16 and the third embodiment of Figs. 10-12 is that the quick release structure 26D includes a mounting head 261D, a mounting recess 262D, a receiving recess 265D and an engaging mechanism 263D. The quick release structure 26D is located between the pivot segment 21D and the clamping segment 22D. The mounting head 261D is convexly disposed on a rear side of the clamping segment 22D and has an engaging recess 264D disposed on a top side of the mounting head 261D. The mounting recess 262D is concavely disposed on the front side of the pivot segment 21D and connected to the mounting head 261D. The front side of the pivot segment 21D is corresponding to the rear side of the clamping segment 22D. The receiving recess 265D is concavely disposed on an inner surface of the pivot segment 21D and communicated with the mounting recess 262D. The receiving recess 265D is corresponding to the engaging recess 264D. The engaging mechanism 263D is disposed in the receiving recess 265D. The engaging mechanism 263D is mounted between the pivot segment 21D and the clamping segment 22D so as to position the mounting head 261D in the mounting recess 262D. In other words, the clamping segment 22D is connected to the pivot segment 21D via the engaging mechanism 263D. In addition, the engaging mechanism 263D includes an elastic member 267D, a positioning ring 268D and an engaging ball 266D. The elastic member 267D is restrictedly mounted in the receiving recess 265D. The positioning ring 268D is disposed in the receiving recess 265D and adjacent to the mounting recess 262D. The positioning ring 268D has a positioning hole, and the positioning hole has a hole diameter. The engaging ball 266D has a ball diameter which is greater than the hole diameter. The engaging ball 266D is pushed by the elastic member 267D to movably connect to the mounting head 261D. The engaging ball 266D is partially passed through the positioning hole to connect to the engaging recess 264D.

In Figs. 15 and 16, when one of the tire pressure sensors 52 having different sizes is assembled by the auxiliary fixture for the tire pressure monitoring device 50 of the fifth embodiment, the clamping segment 22D corresponding to the tire pressure sensor 52 is moved to connect to the pivot segment 21D, and the mounting head 261D of the quick release structure 26D is inserted into the mounting recess 262D. During the engagement between the mounting head 261D and the mounting recess 262D, the engaging ball 266D is partially engaged with the mounting head 261D at the engaging recess 264D by a pressing force of the elastic member 267D, so that the clamping segment 22D can be connected to the pivot segment 21D easily and quickly, and the tire pressure sensor 52 can be stably clamped by the corresponding clamping segment 22D. When the user wants to replace another one of the clamping segments 22D having different sizes, the engaging ball 266D may be moved relative to the receiving recess 265D and the engaging recess 264D since the engaging ball 266D is elastically pressed against the elastic member 267D. Thus, the user may release the engagement between the engaging ball 266D and the engaging recess 264D by pulling the clamping segment 22D to move away from the pivot segment 21D.

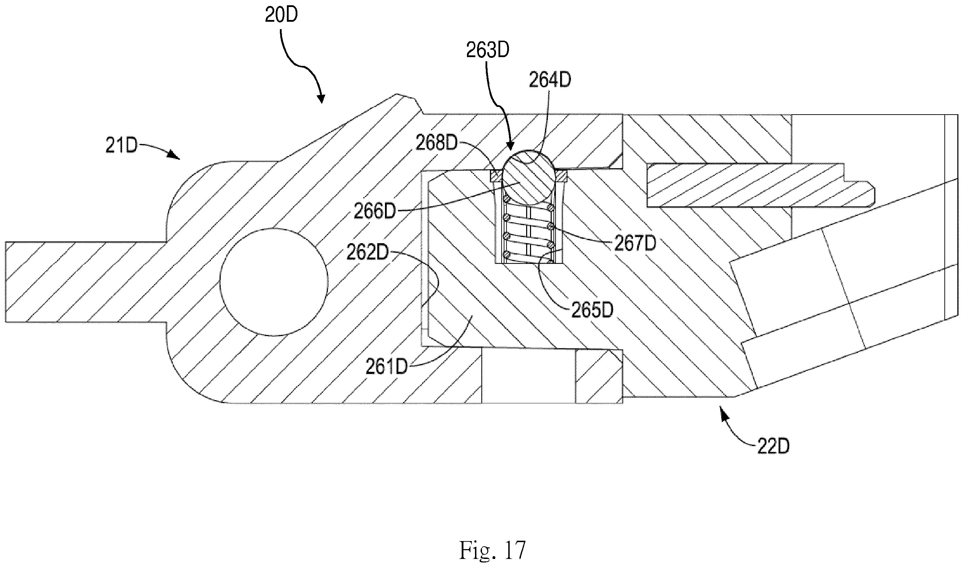

Fig. 17 shows a side cross-sectional view of a positioning base 20D of an auxiliary fixture for a tire pressure monitoring device 50 according to a sixth embodiment of the present disclosure. A difference between the sixth embodiment of Fig. 17 and the fifth embodiment of Figs. 14-16 is that the mounting head 261D has a receiving recess 265D concavely disposed on the top side of the mounting head 261D. The mounting recess 262D is concavely disposed on the front side of the pivot segment 21D and connected to the mounting head 261D. The engaging recess 264D is concavely disposed on an inner surface of the pivot segment 21D and communicated with the mounting recess 262D. The engaging recess 264D is corresponding to the receiving recess 265D. The engaging mechanism 263D is disposed in the receiving recess 265D. The engaging mechanism 263D is mounted between the pivot segment 21D and the clamping segment 22D so as to position the mounting head 261D in the mounting recess 262D. Furthermore, the engaging mechanism 263D includes an elastic member 267D, a positioning ring 268D and an engaging ball 266D. The elastic member 267D is restrictedly mounted in the receiving recess 265D. The positioning ring 268D is disposed in the receiving recess 265D and adjacent to the mounting recess 262D. The positioning ring 268D has a positioning hole, and the positioning hole has a hole diameter. The engaging ball 266D has a ball diameter greater than the hole diameter. The engaging ball 266D is pushed by the elastic member 267D to movably connect to the mounting recess 262D. The engaging ball 266D is partially passed through the positioning hole to connect to the engaging recess 264D. The operation of depositing the conventional direct-type TPMS on the tire rim 60 via the auxiliary fixture for the tire pressure monitoring device 50 according to the sixth embodiment of Fig. 17 is same as the fifth embodiment of Figs. 14-16, and is not described in detail.

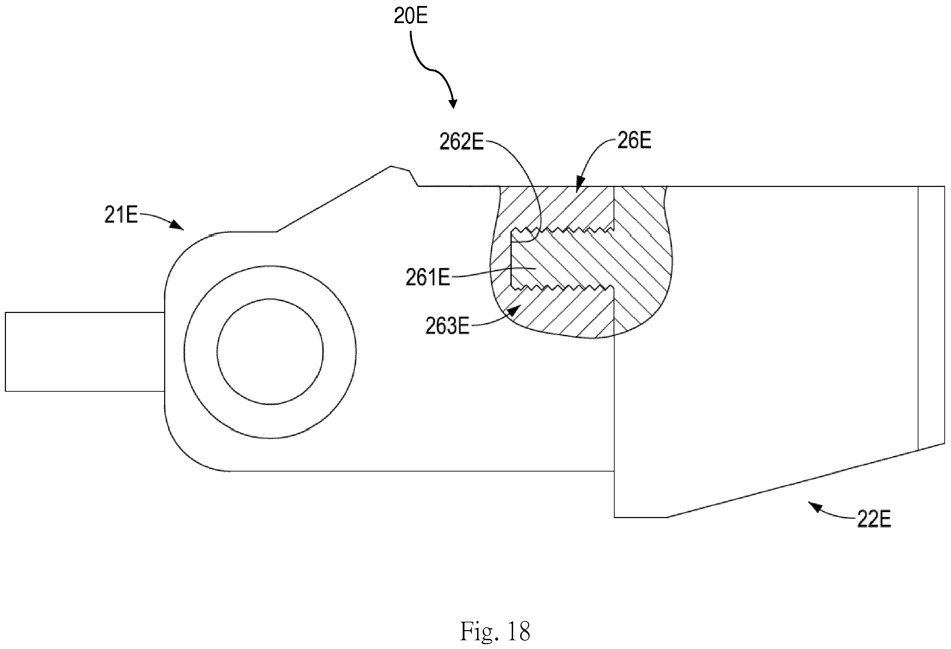

Fig. 18 shows a side cross-sectional view of a positioning base 20E of an auxiliary fixture for a tire pressure monitoring device 50 according to a seventh embodiment of the present disclosure. The positioning base 20E includes a pivot segment 21E, a clamping segment 22E and a quick release structure 26E. The quick release structure 26E includes a mounting head 261E, a mounting recess 262E and an engaging mechanism 263E. A difference between the seventh embodiment of Fig. 18 and the third embodiment of Figs. 10-12 is that the engaging mechanism 263E disposed between the mounting head 261E and the mounting recess 262E has a pair of corresponding threads. The pair of corresponding threads are screwed with each other and disposed on an outer surface of the mounting head 261E and an inner surface of the mounting recess 262E, respectively. The clamping segment 22E is connected to the pivot segment 21E by a screwing operation between the pair of corresponding threads. In another embodiment, the mounting head 261E may be formed on the front side of the pivot segment 21E, and the mounting recess 262E may be formed in the rear side of the clamping segment 22E. The engaging mechanism 263E located between the mounting head 261E and the mounting recess 262E may be configured to connect the clamping segment 22E to the pivot segment 21E.

In Fig. 18, when one of the tire pressure sensors 52 having different sizes is assembled by the auxiliary fixture for the tire pressure monitoring device 50 of the seventh embodiment, the clamping segment 22E corresponding to the tire pressure sensor 52 is rotated to connect to the pivot segment 21E, and the mounting head 261E of the quick release structure 26E is rotatably inserted into the mounting recess 262E. During the rotation between the mounting head 261E and the mounting recess 262E, the pair of corresponding threads of the engaging mechanism 263E are screwed with each other, so that the clamping segment 22E can be connected to the pivot segment 21E by the quick release structure 26E quickly and conveniently, and the tire pressure sensor 52 can be stably clamped by the corresponding clamping segment 22E.

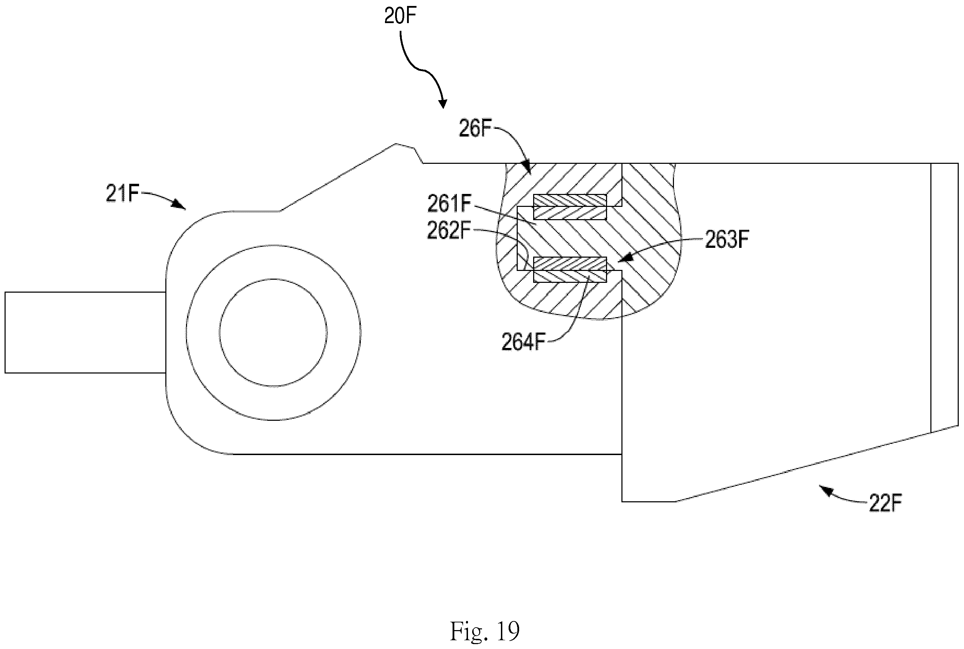

Fig. 19 shows a side cross-sectional view of a positioning base 20F of an auxiliary fixture for a tire pressure monitoring device 50 according to an eighth embodiment of the present disclosure. The positioning base 20F includes a pivot segment 21F, a clamping segment 22F and a quick release structure 26F. The quick release structure 26F includes a mounting head 261F, a mounting recess 262F and an engaging mechanism 263F. A difference between the eighth embodiment of Fig. 19 and the seventh embodiment of Fig. 18 is that the engaging mechanism 263F disposed between the mounting head 261F and the mounting recess 262F has at least one pair of magnetic elements 264F. The pair of magnetic elements 264F are magnetically attracted to each other and disposed on an outer surface of the mounting head 261E and an inner surface of the mounting recess 262E, respectively. The clamping segment 22F is connected to the pivot segment 21F by a magnetic attraction between the pair of magnetic elements 264F. In another embodiment, the engaging mechanism 263F has plural pairs of magnetic elements 264F for stably connecting the mounting head 261F to the mounting recess 262F. In other words, the mounting head 261F has plural magnetic elements 264F mounted on the outer surface of the mounting head 261F, and the mounting recess 262F has plural magnetic elements 264F mounted on the inner surface of the mounting recess 262F. The magnetic elements 264F of the mounting head 261F are corresponding to the magnetic elements 264F of the mounting recess 262F, respectively.

In Fig. 19, when one of the tire pressure sensors 52 having different sizes is assembled by the auxiliary fixture for the tire pressure monitoring device 50 of the eighth embodiment, the clamping segment 22F corresponding to the tire pressure sensor 52 is moved to connect to the pivot segment 21F, and the mounting head 261F of the quick release structure 26F is inserted into the mounting recess 262F. During the engagement between the mounting head 261F and the mounting recess 262F, the pair of magnetic elements 264F of the engaging mechanism 263F are magnetically attracted to each other, so that the clamping segment 22F can be connected to the pivot segment 21E by the quick release structure 26F quickly and conveniently, and the tire pressure sensor 52 can be stably clamped by the corresponding clamping segment 22F.

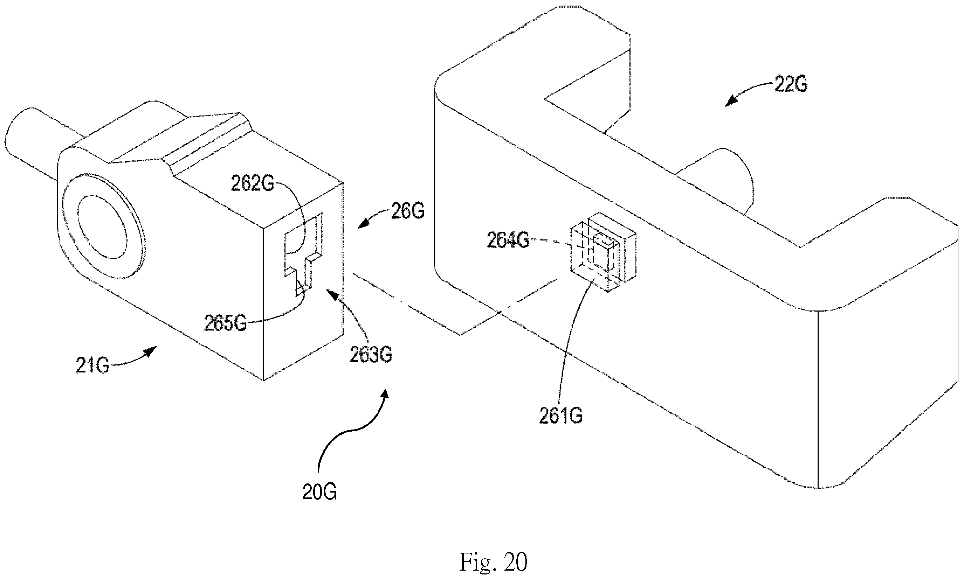

Fig. 20 shows an exploded view of a positioning base 20G of an auxiliary fixture for a tire pressure monitoring device 50 according to a ninth embodiment of the present disclosure. The positioning base 20G includes a pivot segment 21G, a clamping segment 22G and a quick release structure 26G. The quick release structure 26G includes a mounting head 261G, a mounting recess 262G and an engaging mechanism 263G. A difference between the ninth embodiment of Fig. 20 and the third embodiment of Figs. 10-12 is that the mounting head 261G is convexly disposed on the rear side of the clamping segment 22G. The mounting recess 262G is concavely disposed on the front side of the pivot segment 21G. The engaging mechanism 263G is disposed between the mounting head 261G and the mounting recess 262G. The engaging mechanism 263G includes a neck portion 264G and an engaging mouth 265G. The neck portion 264G is concavely disposed on the outer surface of the mounting head 261G and adjacent to the rear side of the clamping segment 22G. The engaging mouth 265G is concavely disposed on the front side of the pivot segment 21G and communicated with the mounting recess 262G. A width of the engaging mouth 265G is narrower than a width of the mounting recess 262G and corresponding to a width of the neck portion 264G, thereby allowing the engaging mouth 265G to dispose around the neck portion 264G.

In Fig. 20, when one of the tire pressure sensors 52 having different sizes is assembled by the auxiliary fixture for the tire pressure monitoring device 50 of the ninth embodiment, the clamping segment 22G corresponding to the tire pressure sensor 52 is moved to engage with the pivot segment 21G, and the mounting head 261G of the quick release structure 26G is rotatably inserted into the mounting recess 262G. During the engagement between the mounting head 261G and the mounting recess 262G, the clamping segment 22G is moved downwardly relative to the pivot segment 21G to enable the neck portion 264G to engage in the engaging mouth 265G, so that the clamping segment 22G can be connected to the pivot segment 21G by the quick release structure 26G quickly and conveniently, and the tire pressure sensor 52 can be stably clamped by the corresponding clamping segment 22G.

In Figs. 18-20, the positions of the mounting heads 261E, 261F, 261G and the mounting recesses 262E, 262F, 262G of the quick release structure 26E, 26F, 26G can be exchanged for each other between the pivot segments 21E, 21F, 21G and the clamping segments 22E, 22F, 22G, thus providing convenience in assembly and disassembly.

According to the aforementioned embodiments and examples, the two adjusting elements 23, 23A, 23C deposited on the positioning base 20, 20A, 20C can be adjusted to change the distance between the two adjusting elements 23, 23A, 23C. When one of the tire pressure sensors 52 having different sizes is assembled by the auxiliary fixture for the tire pressure monitoring device 50, the user may adaptively adjust the distance between the two adjusting elements 23, 23A, 23C of the positioning base 20, 20A, 20C. Moreover, the quick release structure 26B, 26C, 26D, 26E, 26F, 26G can be respectively deposited between the pivot segment 21B, 21C, 21D, 21F, 21G, 21G and the clamping segment 22B, 22C, 22D, 22E, 22F, 22G. When one of the tire pressure sensors 52 having different sizes is assembled by the auxiliary fixture for the tire pressure monitoring device 50, the user may quickly replace the clamping segment 22B, 22C, 22D, 22E, 22F, 22G of the positioning base 20B, 20C with a suitable one by the quick release structure 26B, 26C, 26D, 26E, 26F, 26G to stably clamp the corresponding tire pressure sensor 52. Accordingly, the auxiliary fixture of the present disclosure may greatly reduce the cost and assembling time, and may assemble the tire pressure monitoring device 50 in the tire rim 60 accurately and quickly, thereby providing convenience in assembly and disassembly.

## Claims

1. An auxiliary fixture for a tire pressure monitoring device, the auxiliary fixture comprising:
a handle (10);
a positioning base (20B, 20C, 20D) comprising:
a pivot segment (21B, 21C, 21D) connected to the handle (10);
a clamping segment (22B, 22C, 22D) having a rear side and a front side, wherein the rear side is connected to the pivot segment (21B, 21C, 21D), and the front side comprises a pushing pin (225); and
a quick release structure (26B, 26C, 26D) detachably connected between the pivot segment (21B, 21C, 21D) and the clamping segment (22B, 22C, 22D); and
a holding lever (30) pivotally connected to the handle (10);
wherein the handle (10) is pivoted relative to the holding lever (30) to push the positioning base (20B, 20C, 20D) so as to enable the pushing pin (225B, 225C, 225D) to press against the tire pressure monitoring device (50).

2. The auxiliary fixture of claim 1, wherein the quick release structure (26B) comprises:
a mounting head (261B) convexly disposed on a front side of the pivot segment (21B) and having a neck portion (264B);
a mounting recess (262B) concavely disposed on a rear side of the clamping segment (22B) and connected to the mounting head (261B), and the front side of the pivot segment (21B) corresponding to the rear side of the clamping segment (22B);
an installing recess (265B) concavely disposed on a top side of the clamping segment (22B) and communicated with the mounting recess (262B); and
an elastic buckle (263B) passed through the installing recess (265B) and deposited in the mounting recess (262B) via the installing recess (265B), and the elastic buckle (263B) engaged with the neck portion (264B).

3. The auxiliary fixture of claim 1, wherein the quick release structure (26D) comprises:
a mounting head (261D) convexly disposed on a rear side of the clamping segment (22D) and having an engaging recess (264D);
a mounting recess (262D) concavely disposed on a front side of the pivot segment (21D) and connected to the mounting head (261D), and the front side of the pivot segment (21D) corresponding to the rear side of the clamping segment (22D);
a receiving recess (265D) concavely disposed on an inner surface of the pivot segment (21D) and communicated with the mounting recess (262D), and the receiving recess (265D) corresponding to the engaging recess (264D); and
an engaging mechanism (263D) disposed in the receiving recess (265D), wherein the engaging mechanism (263D) is mounted between the pivot segment (21D) and the clamping segment (22D) so as to position the mounting head (261D) in the mounting recess (262D).

4. The auxiliary fixture of claim 3, wherein the engaging mechanism (263D) comprises:
an elastic member (267D) restrictedly mounted in the receiving recess (265D);
a positioning ring (268D) disposed in the receiving recess (265D) and adjacent to the mounting recess (262D), wherein the positioning ring (268D) has a positioning hole, and the positioning hole has a hole diameter; and
an engaging ball (266D) having a ball diameter greater than the hole diameter, wherein the engaging ball (266D) is pushed by the elastic member (267D) to movably connect to the mounting head (261D), and the engaging ball (266D) is partially passed through the positioning hole to connect to the engaging recess (264D).

5. The auxiliary fixture of claim 1, wherein the quick release structure (26D) comprises:
a mounting head (261D) convexly disposed on a rear side of the clamping segment (22D) and having a receiving recess (265D);
a mounting recess (262D) concavely disposed on a front side of the pivot segment (21D) and connected to the mounting head (261D), and the front side of the pivot segment (21D) corresponding to the rear side of the clamping segment (22D);
an engaging recess (264D) concavely disposed on an inner surface of the pivot segment (21D) and communicated with the mounting recess (262D), and the engaging recess (264D) corresponding to the receiving recess (265D); and
an engaging mechanism (263D) disposed in the receiving recess (265D), wherein the engaging mechanism (263D) is mounted between the pivot segment (21D) and the clamping segment (22D) so as to position the mounting head (261D) in the mounting recess (262D).

6. The auxiliary fixture of claim 5, wherein the engaging mechanism (263D) comprises:
an elastic member (267D) restrictedly mounted in the receiving recess (265D);
a positioning ring (268D) disposed in the receiving recess (265D) and adjacent to the mounting recess (262D), wherein the positioning ring (268D) has a positioning hole, and the positioning hole has a hole diameter; and
an engaging ball (266D) having a ball diameter greater than the hole diameter, wherein the engaging ball (266D) is pushed by the elastic member (267D) to movably connect to the mounting recess (262D), and the engaging ball (266D) is partially passed through the positioning hole to connect to the engaging recess (264D).

7. The auxiliary fixture of claim 1, wherein the clamping segment (22B) comprises:
a positioning portion (221) detachably connected to the pivot segment (21B) and connected to the pushing pin (225B);
two positioning arms (222) integrally connected to two ends of the positioning portion (221) to form a positioning recess (226), and the positioning recess (226) configured to contain the pushing pin (225B) and the tire pressure monitoring device (50); and
two adjusting elements (23) movably connected to the two positioning arms (222), respectively, wherein the two adjusting elements (23) are corresponding to each other, the pushing pin (225B) is located between the two adjusting elements (23), there is a distance between the two adjusting elements (23), and the distance is changed by moving the two adjusting elements (23) so as to detachably connect the clamping segment (22B) to the tire pressure monitoring device (50) in the positioning recess (226).

8. The auxiliary fixture of claim 2, wherein the clamping segment (22C) comprises:
a positioning portion (221C) detachably connected to the pivot segment (21C) and connected to the pushing pin (225C);
two positioning arms (222C) integrally connected to two ends of the positioning portion (221C) to form a positioning recess (226C), and the positioning recess (226C) configured to contain the pushing pin (225C) and the tire pressure monitoring device (50); and
two adjusting elements (23C) movably connected to the two positioning arms (222C), respectively, wherein the two adjusting elements (23C) are corresponding to each other, the pushing pin (225C) is located between the two adjusting elements (23C), there is a distance between the two adjusting elements (23C), and the distance is changed by moving the two adjusting elements (23C) so as to detachably connect the clamping segment (22C) to the tire pressure monitoring device (50) in the positioning recess (226C).

9. The auxiliary fixture of claim 3, wherein the clamping segment (22D) comprises:
a positioning portion (221) detachably connected to the pivot segment (21B) and connected to the pushing pin (225D);
two positioning arms (222) integrally connected to two ends of the positioning portion (221) to form a positioning recess (226), and the positioning recess (226) configured to contain the pushing pin (225D) and the tire pressure monitoring device (50); and
two adjusting elements (23) movably connected to the two positioning arms (222), respectively, wherein the two adjusting elements (23) are corresponding to each other, the pushing pin (225D) is located between the two adjusting elements (23), there is a distance between the two adjusting elements (23), and the distance is changed by moving the two adjusting elements (23) so as to detachably connect the clamping segment (22D) to the tire pressure monitoring device (50) in the positioning recess (226).

10. The auxiliary fixture of claim 4, wherein the clamping segment (22D) comprises:
a positioning portion (221) detachably connected to the pivot segment (21B) and connected to the pushing pin (225D);
two positioning arms (222) integrally connected to two ends of the positioning portion (221) to form a positioning recess (226), and the positioning recess (226) configured to contain the pushing pin (225D) and the tire pressure monitoring device (50); and
two adjusting elements (23) movably connected to the two positioning arms (222), respectively, wherein the two adjusting elements (23) are corresponding to each other, the pushing pin (225D) is located between the two adjusting elements (23), there is a distance between the two adjusting elements (23), and the distance is changed by moving the two adjusting elements (23) so as to detachably connect the clamping segment (22D) to the tire pressure monitoring device (50) in the positioning recess.

11. The auxiliary fixture of claim 1, wherein,
the auxiliary fixture is configured to dispose the tire pressure monitoring device (50) and a valve stem (51) on a tire rim (60);
the tire pressure monitoring device (50) comprises a tire pressure sensor (52) connected to the valve stem (51), and the tire pressure sensor (52) is detachably connected to the positioning base (20B, 20C, 20D) and pushed by the pushing pin (225B, 225C, 225D);
the tire rim (60) comprises a valve hole (61), an inner annular surface (62) and an outer annular edge (63), the valve stem (51) is inserted into the valve hole (61), the inner annular surface (62) is abutted by a front end of the handle (10), and a front end of the holding lever (30) is engaged with the outer annular edge (63); and
the handle (10) is pivotally rotated relative to the holding lever (30) to enable the positioning base (20B, 20C, 20D) to press against the tire pressure sensor (52) along an axle direction of the valve hole (61) so as to stably engage the valve stem (51) with the tire rim (60).

12. The auxiliary fixture of claim 2, wherein,
the auxiliary fixture is configured to dispose the tire pressure monitoring device (50) and a valve stem (51) on a tire rim (60);
the tire pressure monitoring device (50) comprises a tire pressure sensor (52) connected to the valve stem (51), and the tire pressure sensor (52) is detachably connected to the positioning base (20B) and pushed by the pushing pin (225B);
the tire rim (60) comprises a valve hole (61), an inner annular surface (62) and an outer annular edge (63), the valve stem (51) is inserted into the valve hole (61), the inner annular surface (62) is abutted by a front end of the handle (10), and a front end of the holding lever (30) is engaged with the outer annular edge (63); and
the handle (10) is pivotally rotated relative to the holding lever (30) to enable the positioning base (20B) to press against the tire pressure sensor (52) along an axle direction of the valve hole (61) so as to stably engage the valve stem (51) with the tire rim (60).

13. The auxiliary fixture of claim 3, wherein,
the auxiliary fixture is configured to dispose the tire pressure monitoring device (50) and a valve stem (51) on a tire rim (60);
the tire pressure monitoring device (50) comprises a tire pressure sensor (52) connected to the valve stem (51), and the tire pressure sensor (52) is detachably connected to the positioning base (20D) and pushed by the pushing pin (225D);
the tire rim (60) comprises a valve hole (61), an inner annular surface (62) and an outer annular edge (63), the valve stem (51) is inserted into the valve hole (61), the inner annular surface (62) is abutted by a front end of the handle (10), and a front end of the holding lever (30) is engaged with the outer annular edge (63); and
the handle (10) is pivotally rotated relative to the holding lever (30) to enable the positioning base (20D) to press against the tire pressure sensor (52) along an axle direction of the valve hole (61) so as to stably engage the valve stem (51) with the tire rim (60).

14. The auxiliary fixture of claim 4, wherein,
the auxiliary fixture is configured to dispose the tire pressure monitoring device (50) and a valve stem (51) on a tire rim (60);
the tire pressure monitoring device (50) comprises a tire pressure sensor (52) connected to the valve stem (51), and the tire pressure sensor (52) is detachably connected to the positioning base (20D) and pushed by the pushing pin (225D);
the tire rim (60) comprises a valve hole (61), an inner annular surface (62) and an outer annular edge (63), the valve stem (51) is inserted into the valve hole (61), the inner annular surface (62) is abutted by a front end of the handle (10), and a front end of the holding lever (30) is engaged with the outer annular edge (63); and
the handle (10) is pivotally rotated relative to the holding lever (30) to enable the positioning base (20D) to press against the tire pressure sensor (52) along an axle direction of the valve hole (61) so as to stably engage the valve stem (51) with the tire rim (60).

15. An auxiliary fixture for a tire pressure monitoring device, the auxiliary fixture comprising:
a handle (10);
a positioning base (20) comprising:
a pivot segment (21) connected to the handle (10);
a clamping segment (22) having a rear side and a front side, wherein the rear side is connected to the pivot segment (21), and the front side comprises a pushing pin (225); and
two adjusting elements (23) movably connected to two ends of the clamping segment (22), wherein the two adjusting elements (23) are corresponding to each other, the pushing pin (225) is located between the two adjusting elements (23), there is a distance between the two adjusting elements (23), and the distance is changed by moving the two adjusting elements (23) so as to detachably connect the clamping segment (22) to the tire pressure monitoring device (50); and
a holding lever (30) pivotally connected to the handle (10);
wherein the handle (10) is pivoted relative to the holding lever (30) to push the positioning base (20) so as to enable the pushing pin (225) to press against the tire pressure monitoring device (50).
